(19) Europäisches Patentamt
European Patent Office
Office européen des brevets

(11) **EP 1 494 098 B1**

(12) **EUROPÄISCHE PATENTSCHRIFT**

(45) Veröffentlichungstag und Bekanntmachung des Hinweises auf die Patenterteilung:
**24.05.2006   Patentblatt 2006/21**

(51) Int Cl.:
*G05B 9/02* (2006.01)   *G01D 5/165* (2006.01)

(21) Anmeldenummer: **03015212.8**

(22) Anmeldetag: **04.07.2003**

(54) **Steuergerät für die Sicherheitstechnik und entsprechendes Steuerungsverfahren**

Control device for safety engineering and control method

Dispositif de commande pour technique de sécurité et procédé de commande

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**05.01.2005   Patentblatt 2005/01**

(73) Patentinhaber: **SIEMENS AKTIENGESELLSCHAFT**
**80333 München (DE)**

(72) Erfinder: **Behringer, Klaus**
**91338 Igensdorf (DE)**

(56) Entgegenhaltungen:
**EP-A- 1 022 570          DE-A- 3 522 775**
**DE-A- 4 322 472          US-A- 5 812 411**

EP 1 494 098 B1

**Beschreibung**

Steuergerät für die Sicherheitstechnik und entsprechendes Steuerungsverfahren

Die vorliegende Erfindung betrifft ein Steuergerät mit einem Potentiometer und einer Prüfeinrichtung gemäß dem Oberbegriff von Patentanspruch 1. Darüber hinaus betrifft die vorliegende Erfindung ein entsprechendes Verfahren zum Steuern eines Geräts gemäß dem Oberbegriff von Patentanspruch 5. Solche Steuergeräte und Verfahren sind bekannt aus der DE 43 22 472 A1, der US 5,812,411 und der EP 1 022 570 A2.

In vielen Anwendungen der Sicherheitstechnik ist die Auswertung eines Potentiometers erforderlich. Üblicherweise werden hierbei redundante Verfahren eingesetzt, um Fehler sicher zu erkennen. Beispielsweise werden die einzelnen Potentiometer eines Doppel-Potentiometers mit durchgehender Achse redundant ausgewertet. Derartige Verfahren beziehungsweise Vorrichtungen sind jedoch unter dem Aspekt der Kosten, der mechanischen Stabilität und des Platzbedarfs verbesserungswürdig.

Es befinden sich jedoch auch Sicherheitsgeräte auf dem Markt, bei denen auf ein zweites Potentiometer verzichtet wurde. Diese weisen aber mehrere Schwächen auf. Zum einen sind sie auf Grund von Fertigungstoleranzen verhältnismäßig ungenau, so dass, wenn die Potentiometer beispielsweise in einem RC-Glied zur Zeitmessung eingesetzt werden, die Zeitmessung entsprechend fehlerbehaftet ist. Zum anderen hängt die Auswertung des Potentiometers auch von qualitativ meist nicht spezifizierten Parametern wie dem Schleiferwiderstand ab, woraus ebenfalls Ungenauigkeiten resultieren. Da ferner ein Potentiometer aus mehreren toleranzbehafteten Komponenten besteht, ist seine Genauigkeit von einer entsprechenden Toleranzkette geprägt, so dass Abweichungen bei den Messungen erst ab einer gewissen Schwelle sicher erkannt werden können.

Die Aufgabe der vorliegenden Erfindung besteht somit darin, ein Steuergerät und ein entsprechendes Steuerungsverfahren vorzuschlagen, mit dem eine erhöhte Zuverlässigkeit eines auszuwertenden Potentiometers gewährleistet werden kann.

Erfindungsgemäß wird diese Aufgabe gelöst durch ein Steuergerät mit den Merkmalen gemäß Patentanspruch 1.

Darüber hinaus ist erfindungsgemäß vorgesehen ein Verfahren zum Steuern eines Geräts mit den Merkmalen gemäß Patentanspruch 5.

Erfindungsgemäß können damit Kurzschlüsse oder offene Anschlüsse eines auszuwertenden Potentiometers einfach und kostengünstig erkannt werden.

Der verwendete elektrische Widerstand ist ein ohmscher Widerstand, der mit dem Potentiometer in Reihe geschaltet ist.

Erfindungsgemäß umfasst die Prüfeinrichtung einen zweiten ohmschen Widerstand, der mit dem Potentiometer und dem ersten ohmschen Widerstand potentiometerseitig in Reihe geschaltet ist. Falls diese Reihenschaltung als Spannungsteiler zwischen einer Betriebsspannung und Masse betrieben wird, sind die Potentiale an den Klemmen des Potentiometers von der Betriebsspannung und Masse verschieden, so dass Kurzschlüsse zur Betriebsspannung oder Masse festgestellt werden können.

Mit der Prüfeinrichtung kann ein Mittenabgriff des Potentiometers und ein Verbindungspunkt zwischen dem Potentiometer und dem festen, elektrischen Widerstand spannungsmäßig ausgewertet werden. Durch Verknüpfen der dabei erhaltenen beiden Spannungen kann vorteilhafterweise ein Kurzschluss zwischen den Anschlüssen des Potentiometers untereinander oder von den Anschlüssen des Potentiometers zu einer Betriebsspannung oder Masse festgestellt werden. Die Spannungszustände an dem Potentiometer können dabei analog oder digital ausgewertet werden.

Um eine Redundanz bei der Auswertung der Spannungen am Potentiometer bereitzustellen, kann eine zweite Prüfeinrichtung zu der genannten ersten Prüfeinrichtung parallel geschaltet werden. Dies bedeutet in der Praxis, dass in einem Sicherheitsgerät zwei Controller eingesetzt werden.

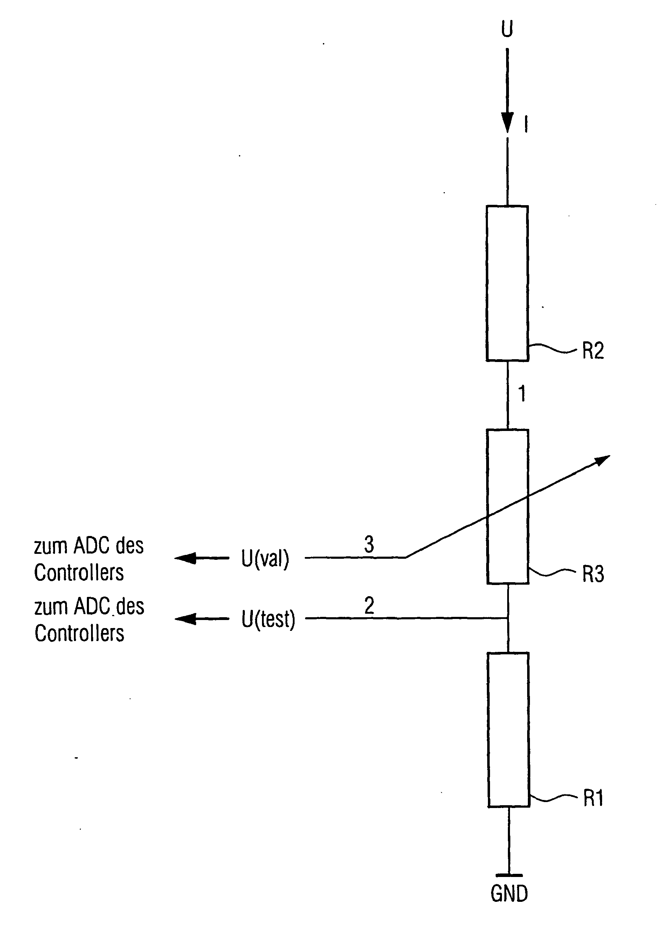

Die vorliegende Erfindung wird nun anhand der beigefügten Zeichnung näher erläutert, die eine Schaltskizze eines erfindungsgemäßen Potentiometers mit Prüfeinrichtung darstellt.

Das nachfolgend näher beschriebene Ausführungsbeispiel stellt eine bevorzugte Ausführungsform der vorliegenden Erfindung dar.

Ein sicherheitsgerichtetes Steuergerät wird beispielsweise dazu verwendet, den Maschinennachlauf nach einem NOTAUS zu regeln. Dabei wird üblicherweise der Lastkreis der Maschine zeitlich gestaffelt geschaltet. Als Zeitglied dient hierzu ein RC-Schaltkreis. Um die Zeitverzögerung variieren zu können, ist der Widerstand als Potentiometer R3 realisiert. Das Potentiometer R3 ist über einen ohmschen Widerstand R1 an Masse gelegt. Mit seiner anderen Klemme ist das Potentiometer R3 über einen zweiten ohmschen Widerstand R2 an eine Referenzspannung U angelegt. Als Referenzspannung U wird typischerweise die Betriebsspannung des Steuergeräts beziehungsweise Controllers verwendet.

Es ergibt sich somit eine Reihenschaltung des ersten Widerstands R1, des Potentiometers R3 und des zweiten Widerstands R2 und damit ein entsprechender Spannungsteiler. Es resultiert ein Strom I mit dem Wert

$$I = \frac{U}{R1 + R2 + R3.}$$

Der Mittenabgriff 3 des Potentiometers R3 liefert einen Spannungswert U(val) der von dem Steuergerät zur Steuerung verwendet wird. Hierzu wird der Spannungswert an den Analog/Digital-Wandler des Controllers angelegt. Zur Überprüfung der Funktionsfähigkeit des Potentiometers R3 wird eine Testspannung U(test) von der Verbindungsstelle 2 zwischen dem ersten ohmschen Widerstand R1 und dem Potentiometer R3 ebenfalls an den Analog/Digital-Wandler ABC des Controllers geliefert. Die Testspannung U(test) ist gegeben durch

$$U(test) = I * R1 .$$

Der Maximalwert, der am Mittenabgriff 3 des Potentiometers R3 erhaltenen Spannung U(val) ergibt sich zu

$$U(val, \max) = I * (R1 + R3) .$$

Somit ist die auszuwertende Spannung U(val) proportional zum Teststrom I. Durch Auswertung der beiden Spannungen U(val) und U(test) können damit die in der nachfolgenden Tabelle dargestellten Fehler aufgedeckt werden.

Tabelle: Fehlererkennung

| Fehler | Erkennung | Bemerkung |
|---|---|---|
| KS zwischen 1-2 | U(test) falsch, da Strom viel zu groß | |
| KS zwischen 1-3 | U(test) falsch, da Strom zu groß, denn R3 ist nur R3(2-3) | |
| KS zwischen 2-3 | U(test) falsch, da Strom zu groß, denn R3 ist nur R3(1-2) | |
| 1 ist offen | U(test) = 0 | |
| 2 ist offen | U(test) = 0 | |
| 3 ist offen | U(val) ist 0 | U(val) muss sein I*R1< U< I* (R1+R3) |
| 3 KS mit U | U(val) = U | U(val) muss sein I*R1< U< I* (R1+R3) |
| 2 KS mit U | U(test) = U | |
| 1 KS mit U | U(test) zu groß | |

In der Tabelle bedeuten KS einen Kurzschluss und die Ziffern 1, 2 und 3 die jeweiligen Anschlüsse des Potentiometers. Ist das Potentiometer beispielsweise dahingehend defekt, dass entsprechend der ersten Zeile der Tabelle zwischen den Anschlüssen 1 und 2 des Potentiometers R3 ein Kurzschluss besteht, so stellt sich eine zu hohe Testspannung U(test) ein, da der Strom I deutlich höher als im fehlerfreien Zustand ist. Ein Vergleich mit einem Sollwert liefert den Hinweis, dass das Potentiometer defekt ist.

Wenn in ähnlicher Weise ein Kurzschluss zwischen den Anschlüssen 1 und 3 des Potentiometers R3 vorliegt, weicht die Testspannung U(test) ebenfalls vom Sollwert ab, da der Widerstand des Potentiometers R3 lediglich dem Widerstand zwischen den Anschlüssen 2 und 3 entspricht. Durch entsprechend genaue Auswertung der Testspannung U(test) können die beiden soeben besprochenen Kurzschlussfälle auch unterschieden werden.

Ein Kurzschluss zwischen den Anschlüssen 2 und 3 des Potentiometer R3 führt ebenfalls zu einer "falschen", d.h. vom Sollwert abweichenden Testspannung U(test). Auch die Fehlerfälle, dass die Anschlüsse 1 und 2 des Potentiometer R3 offen sind, können anhand der Testspannung U(test) erkannt werden, da diese dann Null ist, aber größer als Null sein müsste.

Falls der Anschluss 3 des Potentiometers R3 offen ist, ist die Spannung U(val) gleich Null. Damit liegt sie außerhalb des in der Tabelle angegebenen Sollbereichs und es wird auf einen Fehler geschlossen. Ähnliches gilt, falls die Klemme 3 an die Betriebsspannung U kurzgeschlossen ist. Dann besitzt nämlich die Spannung U(val) den Wert U, der ebenfalls außerhalb des Sollbereichs liegt.

Falls der Anschluss 2 des Potentiometers 3 mit der Betriebsspannung U kurzgeschlossen ist, so befindet sich die Testspanriung U(test) mit dem Wert U über deren Sollwert. Falls schließlich der Anschluss 1 mit der Betriebsspannung U kurzgeschlossen ist, so ergibt sich ebenfalls eine zu große Testspannung U(test). Die Auswertung der beiden Signale U(val) und U(test) zur Erkennung von Fehlern am Potentiometer R3 ist im Wesentlichen unabhängig vom thermischen Driften der Widerstände, so dass mit hoher Sicherheit ein Fehler des Potentiometers erkannt werden kann.

**Patentansprüche**

1.  Steuergerät mit

    - einem Potentiometer (R3), das zur Erzeugung eines Steuersignals auswertbar ist, und
    - einer Prüfeinrichtung zum Überprüfen des Potentiometers (R3) hinsichtlich Fehlerhaftigkeit, wobei
    - die Prüfeinrichtung einen festen ohmschen Widerstand (R1) umfasst, der mit dem Potentiometer (R3) in Reihe geschaltet ist und der seinerseits auswertbar ist, so dass die Auswertung des Widerstands (R1) Rückschluss auf die Fehlerhaftigkeit des Potentiometers (R3) liefert,

    **dadurch gekennzeichnet, dass**
    die Prüfeinrichtung einen zweiten ohmschen Widerstand (R2) umfasst, der mit dem Potentiometer (R3) und dem ersten ohmschen Widerstand (R1)potentiometerseitig in Reihe geschaltet ist.

2.  Steuergerät nach Anspruch 1, wobei mit der Prüfeinrichtung ein Mittenabgriff (3) des Potentiometers (R3) und ein Verbindungspunkt (2) zwischen dem Potentiometer (R3) und dem festen, elektrischen Widerstand (R1) spannungsmäßig auswertbar sind.

3.  Steuergerät nach Anspruch 2, wobei durch Verknüpfen der beiden Spannungen ein Kurzschluss zwischen den Anschlüssen (1 bis 3) des Potentiometers (R3) untereinander oder von den Anschlüssen des Potentiometers (R3) zu einer Betriebsspannung oder einer Masse feststellbar ist.

4.  Steuergerät nach einem der vorhergehenden Ansprüche, wobei eine zweite Prüfeinrichtung zu der genannten Prüfeinrichtung parallel geschaltet ist, um eine redundante Auswertung bereitzustellen.

5.  Verfahren zum Steuern eines Geräts durch

    - Auswerten eines Potentiometers (R3) zur Erzeugung eines Steuersignals, und
    - Überprüfen des Potentiometers (R3) hinsichtlich Fehlerhaftigkeit, wobei
    - das Überprüfen des Potentiometers (R3) ein Auswerten eines mit dem Potentiometer (R3) elektrisch verbundenen, festen, ohmschen Widerstands (R1) umfasst, der mit dem Potentiometer (R3) in Reihe geschaltet ist,

    **dadurch gekennzeichnet, dass**
    ein zweiter ohmscher Widerstand (R2) mit dem Potentiometer (R3) und dem ersten ohmschen Widerstand (R1) potentiometerseitig in Reihe geschaltet ist.

6.  Verfahren nach Anspruch 5, wobei ein Mittenabgriff (3) des Potentiometers (R3) und ein Verbindungspunkt (2) zwischen dem Potentiometer (R3) und dem festen, elektrischen Widerstand (R1) spannungsmäßig ausgewertet werden.

7.  Verfahren nach Anspruch 6, wobei durch Verknüpfen der beiden Spannungen ein Kurzschluss zwischen den Anschlüssen (1 bis 3) des Potentiometers (R3) untereinander oder von den Anschlüssen des Potentiometers (R3) zu einer Betriebsspannung oder Masse festgestellt wird.

8.  Verfahren nach einem der Ansprüche 5 bis 7, wobei das Überprüfen des Potentiometers (R3) zweimal unabhängig durchgeführt wird.

**Claims**

1. Control unit with

   - a potentiometer (R3) which can be evaluated for creation of a control signal, and
   - a test device for checking the potentiometer (R3) for errors
   - the test device comprises a fixed ohmic resistance (R1) which is connected in series with the potentiometer (R3) and which can be evaluated for its part so that the evaluation of the resistance (R1) provides information about the susceptibility of the potentiometer (R3) to errors,

   **characterised in that**,
   the test device comprises a second ohmic resistance (R2) which is connected in series with the potentiometer (R3) and the first ohmic resistance (R1) on the potentiometer side.

2. Control unit in accordance with claim 1, whereby the test device enables a centre tap (3) of the potentiometer (R3) and a connection point (2) between the potentiometer (R3) and the fixed electrical resistance (R1) to be evaluated as regards voltage.

3. Control unit in accordance with claim 2, where combination of the two voltages allows a short circuit between the connections (1 to 3) of the potentiometer (R3) or between the connections of the potentiometer (R3) and an operating voltage or an earth to be established.

4. Control unit in accordance with one of the previous claims, with a second test device being connected in parallel to the given test device to provide a redundant evaluation.

5. Method for controlling a device by

   - Evaluating a potentiometer (R3) for creating a control signal, and
   - Checking the potentiometer (R3) as regards susceptibility to errors, with
   - the checking of the potentiometer (R3) comprising evaluation of a fixed ohmic resistance (R1) electrically connected to the potentiometer (R3) which is connected in series with the potentiometer (R3),

   **characterised in that**,
   a second ohmic resistance (R2) is connected in series with the potentiometer (R3) and the first ohmic resistance (R1) on the potentiometer side.

6. Method in accordance with claim 5, with a centre tap (3) of the potentiometer (R3) and a connection point (2) between the potentiometer (R3) and the fixed, electrical resistance (R1) being evaluated as regards their voltage.

7. Method in accordance with claim 6, with a short circuit between the connections (1 to 3) of the potentiometer (R3) and or from the connections of the potentiometer (R3) to an operating voltage or earth being determined by combining the two voltages.

8. Method in accordance with one of the claims 5 to 7, with the checking of the potentiometer (R3) being performed twice independently.

**Revendications**

1. Appareil de commande comportant

   - un potentiomètre (R3), qui est évaluable pour la production d'un signal de commande, et
   - un dispositif de test pour la vérification du potentiomètre (R3) quant à son éventuelle défectuosité,
   - le dispositif de test comprenant une résistance ohmique fixe (R1) qui est branchée en série avec le potentiomètre (R3) et qui est évaluable pour sa part de telle sorte que l'évaluation de la résistance (R1) fournit une conclusion sur l'éventuelle défectuosité du potentiomètre (R3),

   **caractérisé par le fait que** le dispositif de test comprend une deuxième résistance ohmique fixe (R2) qui est branchée en série avec le potentiomètre (R3) et avec la première résistance ohmique (R1) du côté du potentiomètre.

2. Appareil de commande selon la revendication 1, dans lequel, avec le dispositif de test, une prise médiane (3) du potentiomètre (R3) et un point de liaison (2) entre le potentiomètre (R3) et la résistance électrique fixe (R1) sont évaluables en tension.

3. Appareil de commande selon la revendication 2, dans lequel, en combinant les deux tensions, un court-circuit entre les bornes (1 à 3) du potentiomètre (R3) ou un court-circuit des bornes du potentiomètre (R3) à une tension de fonctionnement ou à une masse est détectable.

4. Appareil de commande selon l'une des revendications précédentes, dans lequel un deuxième dispositif de test est branché en parallèle avec le dispositif de test mentionné pour permettre une évaluation redondante.

5. Procédé de commande d'un appareil par

- évaluation d'un potentiomètre (R3) pour la production d'un signal de commande, et
- vérification du potentiomètre (R3) quant à son éventuelle défectuosité,
- la vérification du potentiomètre (R3) comprenant une évaluation d'une résistance ohmique fixe (R1) qui est reliée électriquement au potentiomètre (R3) et qui est branchée en série avec le potentiomètre (R3),

**caractérisé par le fait qu'**une deuxième résistance ohmique (R2) est branchée en série avec le potentiomètre (R3) et avec la première résistance ohmique (R1) du côté du potentiomètre.

6. Procédé selon la revendication 5, dans lequel on évalue en tension une prise médiane (3) du potentiomètre (R3) et un point de liaison (2) entre le potentiomètre (R3) et la résistance électrique fixe (R1).

7. Procédé selon la revendication 6, dans lequel, en combinant les deux tensions, on détecte un court-circuit entre les bornes (1 à 3) du potentiomètre (R3) ou un court-circuit des bornes du potentiomètre (R3) à une tension de fonctionnement ou à une masse.

8. Procédé selon l'une des revendications 5 à 7, dans lequel la vérification du potentiomètre (R3) est effectuée deux fois, indépendamment l'une de l'autre.

U

I

R2

1

zum ADC des
Controllers $\longleftarrow$ U(val)       3

R3

zum ADC des
Controllers $\longleftarrow$ U(test)       2

R1

GND